Europäisches Patentamt

European Patent Office

Office européen des brevets

(19)

(11) Veröffentlichungsnummer: **0 472 824 A1**

## (12) EUROPÄISCHE PATENTANMELDUNG

(21) Anmeldenummer: **91108465.5**

(51) Int. Cl.⁵: **H04B 10/24**

(22) Anmeldetag: **24.05.91**

(30) Priorität: **27.08.90 EP 90116407**

(43) Veröffentlichungstag der Anmeldung:
**04.03.92 Patentblatt 92/10**

(84) Benannte Vertragsstaaten:
**AT BE CH DE FR GB IT LI NL SE**

(71) Anmelder: **SIEMENS AKTIENGESELLSCHAFT**
**Wittelsbacherplatz 2**
**W-8000 München 2(DE)**

(72) Erfinder: **Panzer, Klaus, Dr.-Ing.**
**Nadistrasse 93**
**W-8000 München 40(DE)**

(54) **Passives optisches Telekommunikationssystem.**

(57) In einem passiven optischen Telekommunikationssystem mit einem zwischen einer zentralen Telekommunikationseinrichtung und einer Mehrzahl von dezentralen Telekommunikationseinrichtungen verlaufenden passiven LWL-Busnetz mit optischen Verzweigern sind lediglich in den dezentralen Telekommunikationseinrichtungen das elektrooptische Sendeelement, das optoelektrische Empfangselement und ein Filter für bidirektionales WDM jeweils konstruktiv zu einem elektrooptischen/optoelektrischen Sende-/Empfangs-Modul kombiniert, und nur in den zentralen Telekommunikationseinrichtungen bilden der elektrooptische Wandler, der optoelektrische Wandler und ein Filter für bidirektionales WDM jeweils konstruktiv getrennte diskrete Bausteine.

Neuere Entwicklungen der Fernmeldetechnik führen in der Ebene der Teilnehmeranschlußleitungen zu passiven optischen Telekommunikationssystemen, in denen jeweils eine Mehrzahl von dezentralen Einrichtungen (Teilnehmerstellen oder jeweils eine Mehrzahl von Teilnehmerstellen zusammenfassenden sog. Distant Units) jeweils über eine eigene Lichtwellenleiter-Anschlußleitung mit einem optischen Verzweiger verbunden ist, der direkt oder über wenigstens einen weiteren optischen Verzweiger mit einem gemeinsamen Lichtwellenleiteranschluß der - insbesondere durch eine Vermittlungsstelle gegebenen - zentralen Einrichtung über einen Lichtwellenleiter-Bus verbunden ist (EP-A-0 171 080; ISSLS'88, Conf. Papers 9.4.1...5; BR Telecom Technol.J.7(1989)2, 100...113). In einem solchen Telekommunikationssystem kann die Signalübertragung von der zentralen Einrichtung (Vermittlungsstelle) aus zu den dezentralen Einrichtungen hin vorzugsweise in einem Burststrom (insbesondere ATM-Zellenstrom) vor sich gehen, aus dem jede dezentrale Einrichtung nur die für ebendiese dezentrale Einrichtung bestimmten Bursts (ATM-Zellen) aufnimmt; die Signalübertragung von den dezentralen Einrichtungen aus zur zentralen Einrichtung (Vermittlungsstelle) hin kann in einem TDMA-Verfahren vor sich gehen, demzufolge eine dezentrale Einrichtung jeden Burst (ATM-Zelle) mit Hilfe einer von der Vermittlungsstelle her einrichtungsindividuell eingestellten Verzögerungseinrichtung synchronisiert aussendet, so daß er sich am gemeinsamen Lichtwellenleiteranschluß der zentralen Einrichtung (Vermittlungsstelle) nicht mit Bursts anderer dezentraler Einrichtungen überschneidet (EP-A-0 171 080; EP-A-0 318 331; EP-A-0 337 619; DE-P 4 014 396).

Die Einführung neuer Telekommunikationssysteme mit LWL-Anschlußleitungen hängt ganz allgemein ab von Art und Umfang der bereits vorhandenen Fernmeldeinfrastrukturen mit den darin bereitgestellten Telekommunikationsdiensten und von der Nachfrage nach neuen Breitbandkommunikationsdiensten. Dabei wird im Bereich der Privathaushalte das potentiell größte Anschlußvolumen gesehen; dieses Anschlußpotential konkretisiert sich indessen zu einer effektiven Anschlußnachfrage nur bei entsprechend niedrigen Kosten eines Breitband-Teilnehmeranschlusses.

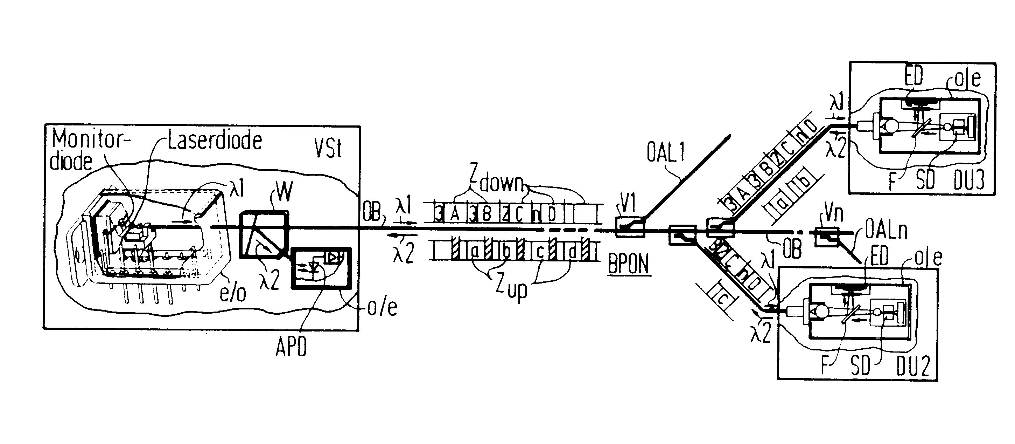

In diesem Zusammenhang ist es (z.B. aus telcom report 11(1988)1, 2...5, Bild 6) bekannt, für die Teilnehmeranschlußleitungen eines LWL-Telekommunikationssystems den für die Aussendung eines Lichtsignals jeweils erforderlichen elektrooptischen Wandler, beispielsweise eine Laser-Diode, mit dem für den Empfang eines Lichtsignals erforderlichen optoelektrischen Wandler, beispielsweise einer PIN-Diode, und einem Filter für bidirektionales WDM konstruktiv zu einem einheitlichen elektrooptischen/optoelektrischen Sende-/Empfangs-Modul für bidirektionale Übertragung zu kombinieren.

Ein solcher Einsatz eines einheitlichen Modultyps mit möglichst kostengünstigen Komponenten in allen Telekommunikationsstellen der Teilnehmeranschlußleitungsebene eines LWL-Telekommunikationssystems führt auf der einen Seite zu einer entsprechenden Kostenreduktion, steht auf der anderen Seite aber in einem Widerspruch zu der weiteren in diesem Zusammenhang bestehenden Forderung, in der Teilnehmeranschlußleitungsebene an eine zentrale Telekommunikationsstelle möglichst viele dezentrale Telekommunikationsstellen anschließen zu können: Letzteres setzt nämlich voraus, daß das System möglichst große Dämpfungen überbrücken kann, was grundsätzlich den Einsatz höherwertiger, aber auch kostenaufwendigerer Bausteine wie etwa leistungsstärkerer Laserdioden als elektrooptische Sendeelemente und Avalanche-Photodioden als optoelektrische Empfangselemente bedingt, wie sie an sich (z.B. aus telcom report 10(1987) Special "Multiplex- und Leitungseinrichtungen", 146...150 und 150...159) bekannt sind.

Die Erfindung zeigt nun einen Weg, solchen widersprüchlichen Forderungen gerecht zu werden.

Die Erfindung betrifft ein passives optisches Telekommunikationssystem mit einer zentralen Telekommunikationseinrichtung und einer Mehrzahl von dezentralen Telekommunikationseinrichtungen, die jeweils über eine eigene Lichtwellenleiter-Anschlußleitung mit einem optischen Verzweiger verbunden sind, der direkt oder über wenigstens einen weiteren optischen Verzweiger mit einem gemeinsamen Lichtwellenleiteranschluß der zentralen Telekommunikationseinrichtung über einen Lichtwellenleiter-Bus verbunden ist, wobei jede der Telekommunikationseinrichtungen mit einem elektrooptischen Sendeelement und einem optoelektrischen Empfangselement sowie einem Filter für Wellenlängengetrenntlagebetrieb |Bidirektionales WDM| ausgestattet ist; dieses Telekommunikationssystem ist erfindungsgemäß dadurch gekennzeichnet, daß lediglich in den dezentralen Telekommunikationseinrichtungen das elektrooptische Sendeelement, das optoelektrische Empfangselement und das Filter jeweils konstruktiv zu einem elektrooptischen/optoelektrischen Sende-/Empfangs-Modul für bidirektionale Übertragung kombiniert sind und nur in der zentralen Telekommunikationseinrichtung der elektrooptische Wandler, der optoelektrische Wandler und das Filter konstruktiv getrennte diskrete Bausteine bilden.

Die Erfindung bringt den Vorteil mit sich, unter Beibehaltung einer hohen Stückzahl (oder sogar noch deren Erhöhung) eines kostengünstigen einheitlichen Sende-/Empfangs-Moduls für die Vielzahl von dezentralen Telekommunikationseinrichtungen in der zentralen Telekommunikationsstelle - und damit in entsprechend geringer Stückzahl - einen leistungsstarken elektrooptischen Sender, wie eine Laserdiode mit einer auch aufwendigeren Regelung, sowie einen höherempfindlichen optoelektrischen Empfänger, wie eine Avalanche-Photodiode, einsetzen zu können und damit im Telekommunikationssystem das sogenannte Power Budget, d.h. die überbrückbare Dämpfung, um etwa 5...10 dB vergrößern zu können; dies erlaubt eine Vergrößerung der Streckenlänge bzw. eine Erhöhung des Verzweigungsfaktors um den Faktor 2...4 und damit unter dem Gesichtspunkt der optischen Leistung eine Verdopplung bis Vervierfachung der Anzahl an ein und dieselbe zentrale Telekommunikationsstelle anschließbarer dezentraler Telekommunikationsstellen.

Es sei bemerkt, daß es (aus DE-A1-3 506 715) bekannt ist, zur bidirektionalen optischen Nachrichtenübertragung über einen Lichtwellenleiter zwischen einer zentralen Sende- u./o. Empfangsstation und mindestens einer dezentralen Sende- u./o. Empfangsstation (Teilnehmerstation) in der Weise zu verfahren,

- daß in den entgegengesetzten Richtungen Nachrichten mit unterschiedlicher Bandbreite übertragen werden,
- daß ein zu der großen Bandbreite gehörendes Licht erster Wellenlänge eine wesentlich geringere optische Spektralbreite besitzt als ein zu der kleineren Bandbreite gehörendes Licht zweiter Wellenlänge,
- daß zumindestens die Wellenlänge des zweiten Lichts im Bereich des Minimums der Gesamtdispersion des Lichtwellenleiters liegt,
- daß das optische Spektrum des zweiten Lichts durch ein optisches Filter derart geformt ist, daß das erste Licht ebenfalls im Bereich des Minimums der Gesamtdispersion des Lichtwellenleiters übertragbar wird und
- daß eine lichtemittierende Diode das zweite Licht erzeugt und daß ein Halbleiterlaser oder eine superstrahlende Diode das erste Licht erzeugt.

Lichtemittierende Dioden werden dabei als kostengünstige elektrooptische Sender bezeichnet, die in der Teilnehmerstation verwendet werden können; nähere Berührungspunkte mit der vorliegenden Erfindung sind indessen nicht gegeben.

Es sei ferner bemerkt, daß man ein bidirektionales LWL-Telekommunikationssystem für Wellenlängengetrenntlagebetrieb zwischen einer zentralen Telekommunikationsstelle und einer Mehrzahl von dezentralen Telekommunikationsstellen mit einem dazwischen verlaufenden passiven LWL-Busnetz bereits in der Weise ausgebildet hat, daß lediglich in der zentralen Telekommunikationsstelle ein elektrooptisches Sendeelement und ein optoelektrisches Empfangselement vorgesehen sind, die für den Wellenlängengetrenntlagebetrieb ausgelegt sind, während in den dezentralen Telekommunikationsstellen jeweils nur ein wellenlängenfilterfreier, im Zeitgetrenntlageverfahren arbeitender und die Aussendung von Licht mit einer solchen Wellenlänge, für deren Empfang die zentrale Telekommunikationsstelle eingerichtet ist, ausgelegten kombinierter optoelektrischer Empfangs-/elektrooptischer Sendebaustein vorgesehen ist, wobei der kombinierte optoelektrische Empfangs/elektrooptische Sendebaustein mit einer alternierend als Empfangsdiode genutzten Laserdiode oder mit einem Laser-Modul gebildet sein kann, dessen Monitor-Photodiode alternierend als Empfangsdiode genutzt wird (EP-A1-0 419 710); nähere Berührungspunkte mit der vorliegenden Erfindung liegen ebenfalls nicht vor.

Weitere Besonderheiten der Erfindung werden aus der nachfolgenden näheren Erläuterung eines Ausführungsbeispiels gemäß der Erfindung anhand der Zeichnung ersichtlich. In der Zeichnung ist schematisch in einem zum Verständnis der Erfindung erforderlichen Umfang ein bidirektionales LWL-Telekommunikationssystem mit einem passiven (vorzugsweise Monomode-)LWL-Busnetz BPON dargestellt, das sich zwischen einer zentralen Telekommunikationsstelle, für die hier eine Vermittlungsstelle VSt steht, und einer Mehrzahl von dezentralen Telekommunikationseinrichtungen erstreckt, für die hier sog. Distant Units ...,DU2,DU3,... stehen. In diesem LWL-Telekommunikationssystem sind die Distant Units DU über einen einfaserigen LWL-Bus OB mit einem gemeinsamen LWL-Multiplexanschluß der Vermittlungsstelle VSt verbunden; die einrichtungsindividuellen LWL-Anschlußleitungen OAL1,...,OALn mögen dabei über - z.B. in Kabelverzweigergehäusen untergebrachte - passive, d.h. nicht wellenlängenselektive, optische Verzweiger V1,...,Vn mit dem zugehörigen LWL-Bus OB verbunden sein, und zwar entweder direkt oder auch über weitere solche Verzweiger. Als optische Verzweiger können dabei beispielsweise Durchgangsmischer oder optische Richtkoppler Anwendung finden. Es ist auch möglich, für eine Mehrzahl von einrichtungsindividuellen LWL-Anschlußleitungen einen gemeinsamen optischen Verzweiger vorzusehen, wie dies an sich (z.B. aus EP-A-0 171 080) bekannt ist und daher hier nicht näher dargestellt zu werden braucht.

In dem in der Zeichnung skizzierten Telekommunikationssystem ist zur Richtungstrennung ein Wellenlängengetrenntlagebetrieb |Bidirektionaler Wellenlängenmultiplex| vorgesehen, indem zur Signalübertragung in Abwärtsrichtung von der zentralen Telekommunikationsstelle VSt zu den dezentralen Telekommunikationsstellen ..., DU2,DU3,... hin Licht einer beispielsweise im 1300-nm-Band liegenden ersten Wellenlänge λ1 und zur Signalübertragung in Aufwärtsrichtung von den dezentralen Telekommunikationsstellen ..., DU2,DU3,... zu der zentralen Telekommunikatonsstelle VSt hin Licht einer etwas größeren, beispielsweise im 1500-nm-Band liegenden zweiten Wellenlänge λ2 verwendet wird. Hierzu sind in der die zentrale Telekommunikationsstelle bildenden Vermittlungsstelle VSt und in den dezentrale Kommunikationsstellen bildenden Distant Units ...,DU2,DU3,... entsprechende elektrooptische Sendeelemente, optoelektrische Empfangselemente und Filter für Wellenlängengetrenntlagebetrieb vorgesehen.

Dabei sind nun lediglich in den dezentralen Telekommunikationseinrichtungen ...,DU2,DU3,... jeweils das elektrooptische Sendeelement SD, das optoelektrische Empfangselement ED und das Filter F für den Wellenlängengetrenntlagebetrieb |Bidirektionales WDM| konstruktiv zu einem elektrooptischen/optoelektrischen Sende-/Empfangs-Modul o|e für bidirektionale Übertragung kombiniert, wie dies auch in der Zeichnung angedeutet ist. Auf der anderen Seite bilden, wie ebenfalls in der Zeichnung angedeutet ist, nur in der zentralen Telekommunikationseinrichtung VSt der elektrooptische Wandler e/o, der optoelektrische Wandler o/e und ein wellenlängenselektives optisches Filter W konstruktiv getrennte diskrete Bausteine. So kann als Filter beispielsweise ein (z.B. aus US-A-4 790 616) bekannter, mit einem Interferenz-Strahlteiler versehener optischer Weichenbaustein W vorgesehen sein, als elektrooptischer Wandler e/o kann ein (beispielsweise aus telcom report 10(1987) Special "Multiplex- und Leitungseinrichtungen", 146...150, Bild 4,) bekannter Lasermodul vorgesehen sein und als optoelektrischer Wandler o/e ein ebenfalls handelsüblicher Baustein mit einer Avalanche-Photodiode.

In dem skizzierten Telekommunikationssystem kann dann, wie dies in der Zeichnung angedeutet ist, die Signalübertragung von der Vermittlungsstelle VSt aus abwärts zu den dezentralen Einrichtung ..., DU2,DU3,... hin auf der Wellenlänge λ1 in einem Burststrom $Z_{down}$, beispielsweise einem ATM-Zellenstrom, vor sich gehen. Solche (jeweils 53 Bit-Octetts umfassenden) ATM-Zellen bestehen jeweils aus einem (5-Octett-)Steuerinformationsfeld (Header) und einem (48 octetts umfassenden) Nutzinformationsfeld. Teil des Headers ist der (16 Bits umfassende) sog. Virtual Path Identifier; ein anderer Teil des Headers ist das sog. Access Control Field.

In den ATM-Zellenstrom $Z_{down}$ können, wenn gerade keine Nutzinformation zu übertragen ist, Synchronisierzellen mit vorgegebenem Bitmuster zur Synchronisation der dezentralen Einrichtungen durch den jeweiligen Zellenanfang eingeblendet sein (sog. pure ATM); es ist aber auch möglich, daß der ATM-Zellenstrom seinerseits in eine (z.B. SONET-)Zeitrahmenstruktur mit in bestimmten festen Abständen auftretenden Synchronisiersignalen (Overhead) eingebettet ist (sog. frame structured ATM).

Aus dem Burststrom (ATM-Zellenstrom) $Z_{down}$ entnimmt jede dezentrale Einrichtung DU nur die für sie bestimmten Bursts, im Beispiel also diejenigen ATM-Zellen, die in ihrem Header, vorzugsweise in dessen Virtual Path Identifier, mit einer ebendieser dezentralen Einrichtung DU zugeordneten Kennzeichnung adressiert sind. In der Zeichnung ist für vier ATM-Zellen eines ATM-Zellenstroms $Z_{down}$ die Unterteilung im Header und Nutzinformationsfeld verdeutlicht, wobei mit den in den Headern dieser vier ATM-Zellen angegebenen Kennzeichnungen (3,3,2,n) angedeutet wird, daß die - Nutzinformationen A und B tragenden - ersten beiden Zellen für die dezentrale Einrichtung DU3 bestimmt sind, daß die - eine Nutzinformation C tragende - dritte Zelle für die dezentrale Einrichtung DU2 bestimmt ist und daß die - eine Nutzinformation D tragende -vierte Zelle für eine in der Zeichnung nicht mehr dargestellte, über die LWL-Teilnehmeranschlußleitung OALn erreichte dezentrale Einrichtung bestimmt ist.

In der umgekehrten Übertragungsrichtung kann die Signalübertragung von den dezentralen Einrichtungen |Distant Units| DU aufwärts Zur Vermittlungsstelle VSt hin auf der Wellenlänge λ2 in einem TDMA-Verfahren mit Bursts (ggf. ATM-Zellen) $Z_{up}$ vor sich gehen, demzufolge eine dezentrale Einrichtung DU jeden Burst mit Hilfe einer von der Vermittlungsstelle VSt her DU-individuell eingestellten Verzögerungseinrichtung synchronisiert aussendet, so daß in Aufwärtsrichtung jeder Burst in einem für die betreffende dezentrale Einrichtung DU reservierten Zeitschlitz (Zeitfach) übertragen wird und ein Burst sich am gemeinsamen Lichtwellenleiteranschluß der zentralen Einrichtung VSt nicht mit Bursts anderer dezentraler Einrichtungen (DU) überschneidet. Eine solche Synchronisierung der dezentralen Einrichtungen DU wird bereits an anderer Stelle (s.z.B. EP-A-0 171 080; EP-A-0 318 331; EP-A-0 337 619; DE-P 4 014 396) beschrieben und braucht daher hier nicht mehr erörtert zu werden.

**Patentansprüche**

1.   Passives optisches Telekommunikationssystem mit einer zentralen Telekommunikationseinrichtung (VSt) und einer Mehrzahl von dezentralen Telekommunikationseinrichtungen (DU), die jeweils über eine eigene Lichtwellenleiter-Anschlußleitung (OAL1, ...,OALn) mit einem optischen Verzweiger (V1,...,Vn) verbunden sind, der direkt oder über wenigstens einen weiteren optischen Verzweiger mit einem gemeinsamen Lichtwellenleiteranschluß der zentralen Telekommunikationseinrichtung (VSt) über einen Lichtwellenleiter-Bus (OB) verbunden ist, wobei jede der Telekommunikationseinrichtungen (VSt, DU) mit einem elektrooptischen Sendeelement und einem optoelektrischen Empfangselement sowie einem Filter für Wellenlängengetrenntlagebetrieb |Bidirektionales WDM| ausgestattet ist,

**dadurch gekennzeichnet,**

daß lediglich in den dezentralen Telekommunikationseinrichtungen (DU) jeweils das elektrooptische Sendeelement (SD), das optoelektrische Empfangselement (ED) und das Filter (F) konstruktiv zu einem elektrooptischen/optoelektrischen Sende-/Empfangs-Modul (o|e) für bidirektionale Übertragung kombiniert sind und nur in der zentralen Telekommunikationseinrichtung (VSt) der elektrooptische Wandler (e/o) , der optoelektrische Wandler (o/e) und das Filter (W) jeweils konstruktiv getrennte diskrete Bausteine bilden.

EP 0 472 824 A1

Monitor-diode

Laserdiode

VSt

λ1

W

OB λ1

λ1

Z down

3A 3B 2C hD

OAL1

V1

λ1

3A 3B 2C hD a b

ED o/e

λ2

F SD DU3

λ2

λ2

λ2

Z up

a b c d

BPON

OB

Vn

OALn

ED o/e

e/o

o/e

APD

3A 3B 2C hD

c

λ1

λ2

F SD DU2

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,X | LU-A-87 688 (SIEMENS AG)<br>* das ganze Dokument *<br>– – – | 1 | H 04 B 10/24 |
| D,Y | EP-A-0 171 080 (SIEMENS AG)<br>* Seite 2, Zeile 11 - Seite 3, Zeile 4 * * Seite 5, Zeile 10 - Zeile 23 *<br>– – – | 1 | |
| D,Y | TELCOM REPORT Bd. 11, Nr. 1, 1988, MüNCHEN,DE<br>Seiten 2 - 5; H. STEGMEIER: 'Künftige Schlüsseltechnologien für die Telekommunikation '<br>* Seite 5; Abbildung 6 *<br>– – – – – | 1 | |

**RECHERCHIERTE SACHGEBIETE (Int. Cl.5)**

H 04 B
H 04 M
H 04 Q

Der vorliegende Recherchenbericht wurde für alle Patentansprüche erstellt

| Recherchenort | Abschlußdatum der Recherche | Prüfer |
|---|---|---|
| Den Haag | 18 Juli 91 | WAGNER U. |